Europäisches Patentamt

European Patent Office

Office européen des brevets

(19)

(11) Veröffentlichungsnummer: **0 259 824 B1**

# (12) EUROPÄISCHE PATENTSCHRIFT

(45) Veröffentlichungstag der Patentschrift: **08.01.92**

(51) Int. Cl.5: **A23K 3/04, A23K 3/03**

(21) Anmeldenummer: **87113083.7**

(22) Anmeldetag: **08.09.87**

(54) Verfahren zur Konservierung von Pressschnitzeln aus der Zuckerrübenverarbeitung.

(30) Priorität: **12.09.86 DE 3631137**

(43) Veröffentlichungstag der Anmeldung:
**16.03.88 Patentblatt 88/11**

(45) Bekanntmachung des Hinweises auf die
Patenterteilung:
**08.01.92 Patentblatt 92/02**

(84) Benannte Vertragsstaaten:
**DE**

(56) Entgegenhaltungen:
**EP-A- 0 062 290**
**EP-A- 0 154 959**
**GB-A- 1 440 667**

**ZUCKERINDUSTRIE, Band 108, Nr. 3, 20. März
1983, Seiten 213-217, Berlin, DE; J. BECK-
HOFF et al.: "Pressschnitzel - eine Alternative zur Schnitzeltrocknung. Einfluss von
Temperatur und Zusätzen auf das Silierergebnis"**

**INTERNATIONAL SUGAR JOURNAL, Band 85,
Nr. 1014, Juni 1983, Seite 186, High Wycombe, Buckinghamshire, GB; C. HELLER:
"Pressed pulp silage as an alternative to
pulp drying"**

(73) Patentinhaber: **HOECHST AKTIENGESELL-
SCHAFT**
**Postfach 80 03 20**
**W-6230 Frankfurt am Main 80(DE)**

(72) Erfinder: **Lück, Erich, Dr.**
**Robert-Stolz-Strasse 102**
**W-6232 Bad Soden am Taunus(DE)**
Erfinder: **Remmert, Karlheinz**
**Krifteler Strasse 3**
**W-6238 Hofheim am Taunus(DE)**

EP 0 259 824 B1

## Beschreibung

Die Erfindung betrifft ein Verfahren zur Konservierung von Preßschnitzeln aus der Zuckerrübenverarbeitung mit einem Wassergehalt von weniger als 80 Gew.-%.

Mit Preßschnitzeln sind die als Rückstand der Zuckerrübenverarbeitung verbleibenden Rübenschnitzel gemeint. Sie werden wegen ihres Gehaltes an ernährungsphysiologisch wertvollen Bestandteilen in großem Umfang als Viehfutter benutzt.

Die Preßschnitzel sind wegen ihres hohen Feuchtigkeitsgehaltes wenig haltbar. Sie stehen nur während einer wenige Monate dauernden Zuckerrübenkampagne zur Verfügung. Es wäre aber wünschenswert, sie auch in der übrigen Zeit des Jahres anbieten zu können. Es fehlt deshalb nicht an Vorschlägen, die Rübenschnitzel haltbar zu machen.

Man kann die Preßschnitzel durch Trocknen auf einen Wassergehalt von 10 % bringen, wodurch sie unbeschränkt haltbar werden. Dieses Verfahren ist aber sehr energieaufwendig.

Weiterhin ist es bekannt, die Preßschnitzel durch Zusatz von Sorbinsäure oder Sorbaten zusammen mit wasserlöslichen und physiologisch unbedenklichen anorganischen Säuren oder deren sauren Salzen zu konservieren (Europäische Patentschrift 62 290). Die Sorbinsäure und die Sorbate sind der eigentliche Konservierungsstoff, die Säurekomponente hat den Sinn, den pH-Wert der Preßschnitzel abzusenken, wodurch die Wirksamkeit der Sorbinsäure gesteigert wird. Aus preislichen und ernährungsphysiologischen Gründen wird als Säuerungskomponente vorzugsweise Orthophosphorsäure benutzt. Eine gemeinsame Einarbeitung von Orthophosphorsäure zusammen mit Sorbinsäure oder Sorbaten ist nicht möglich, weil sich Sorbinsäure oder Sorbate nicht ausreichend in der Orthophoshorsäure lösen lassen. Aus diesem Grunde hat das Verfahren gemäß der Europäischen Patentschrift 62 290 den Nachteil, daß die beiden Konservierungskomponenten getrennt zugegeben werden müssen.

Es wurde gefunden, daß man die Verwendung von Sorbinsäure und Sorbaten zusammen mit den in der Europäischen Patentschrift 62 290 beschriebenen Säuerungskomponenten sehr vereinfachen kann, wenn man beide Zusätze in Melasse auflöst bzw. verteilt und dann diese Melasse mit den Preßschnitzeln vermengt. Gegenstand der Erfindung ist ein Verfahren zur Konservierung von Preßschnitzeln aus der Zuckerrübenverarbeitung mit einem Wassergehalt von weniger als 80 Gew.-%, dadurch gekennzeichnet, daß man die Preßschnitzel mit einer Konservierungsmischung vermengt, bestehend aus Melasse, mindestens einer Verbindung der aus Sorbinsäure und den Sorbaten bestehenden Verbindungsklasse, und zwar in einer Menge von $2 \times 10^{-4}$ bis $5 \times 10^{-3}$ Mol pro 100 g unkonservierte Preßschnitzel, und mindestens einer Verbindung der aus wasserlöslichen und physiologisch unbedenklichen anorganischen Säuren und ihren sauren Salzen bestehenden Verbindungsklasse, und zwar in einer solchen Menge, daß das Gemenge aus den Preßschnitzeln und der Konservierungsmischung einen pH-Wert von höchstens 5,8 hat. Sorbinsäure und Sorbate sollten dabei vorzugsweise Korngrößen unter 300 μm aufweisen.

Man kann Sorbinsäure oder ein oder mehrere Sorbate oder ein Gemisch aus Sorbinsäure mit einem oder mehreren Sorbaten benutzen, vorzugsweise Sorbinsäure oder Kaliumsorbat. Die Menge an Sorbinsäure- bzw. Sorbat-Komponente beträgt $2 \times 10^{-4}$ bis $5 \times 10^{-3}$ Mol, vorzugsweise $5 \times 10^{-4}$ bis $1,5 \times 10^{-3}$ Mol, pro 100 g unkonservierte Preßschnitzel. Falls man Sorbinsäure selbst einsetzt, wäre also die Menge in Gewichtsprozent etwa 0,022 bis 0,56 %, vorzugsweise etwa 0,056 bis 0,17 %, bezogen auf unkonservierte Preßschnitzel.

Als saure Komponente wird eine wasserlösliche und physiologisch unbedenkliche anorganische Säure oder ein oder mehrere saure Salze derartiger Säuren oder ein Gemisch aus einer derartigen Säure mit einem oder mehreren sauren Salzen derartiger Säuren benutzt. Geeignet sind z.B. Orthophosphorsäure, Salzsäure, Schwefelsäure, saure Salze der Orthophosphorsäure, Hydrogensulfate, Hydrogensulfite. Vorzugsweise verwendet man Orthophosphorsäure, deren saure Salze, Hydrogensulfate oder Hydrogensulfite. Besonders bevorzugt sind Orthophosphorsäure und Natriumhydrogenphosphat. Die Menge der sauren Komponente ist so zu bemessen, daß die Mischung aus den Preßschnitzeln, der Melasse und den beiden genannten Komponenten einen pH-Wert von höchstens 5,8 hat. Nach unten ist der pH-Wert dadurch begrenzt, daß ein zu stark sauer schmeckendes Futter von den Tieren nicht mehr akzeptiert wird. Wo die Untergrenze liegt, kann jedenfalls im Einzelfall leicht ermittelt werden. Falls man 75 Gew.-prozentige Orthophosphorsäure einsetzt, verwendet man im allgemeinen etwa 0,1 bis 2 Gew.-%, vorzugsweise 0,3 bis 0,6 Gew.-%, bezogen auf unkonservierte Preßschnitzel.

Es ist zweckmäßig, die Melasse auf etwa 60 bis 80 °C zu erhitzen und die saure Komponente sowie die Sorbinsäure und/oder das Sorbat unter Rühren in die heiße Melasse einzuarbeiten. Diese kann kann in üblicher Weise auf die Preßschnitzel aufgesprüht werden. Die Mischung mit Melasse hat, abgesehen von der einfachen Anwendung der Konservierungsstoffe, auch den Vorteil, den Nährstoffgehalt der Preßschnitzel zu erhöhen. Die Menge an Melasse beträgt im allgemeinen etwa 5 bis 15 Gew.-%, bezogen auf die Menge

2

an Preßschnitzeln.

Das erfindungsgemäße Konservierungsverfahren ist wirtschaftlicher als die Trocknung. Es kann mit einer teilweisen Trockung kombiniert werden, wordurch die Haltbarkeit der Preßschnitzel weiter gesteigert wird. Auch können die erfindungsgemäß konservierten Preßschnitzel, sofern der Wassergehalt ausreichend hoch liegt, später siliert werden, denn die Konservierungsstoffkombination stört die Säurebildung bei der Silierung nicht. Die erfindungsgemäß konservierten Preßschnitzel werden von Kühen und anderen Nutztieren geschmacklich akzeptiert.

Die in den folgenden Beispielen und Vergleichsbeispielen angegebenen Prozente sind stets Gewichtsprozente.

Vergleichsbeispiel 1

Noch heiße Preßschnitzel mit einem Wassergehalt von etwa 75 % wurden in einem Mischer mit den in der Tabelle aufgeführten Konservierungsstoffen versetzt; die Orthophosphorsäure wurde durch Sprühen aufgebracht, Sorbinsäure bzw. Kaliumsorbat in fester Form eingemischt. Die konservierten Preßschnitzel wurden in halb gefüllten Glasflaschen und Foliensäcken tagsüber bei Zimmertemperatur, nachts bei 12 bis 15°C gelagert. Durch die Lagerung bei unterschiedlichen Temperaturen bildete sich Kondenswasser, das für die Haltbarkeit erfahrungsgemäß ungünstig ist. Es ergaben sich folgende Haltbarkeiten:

| Konservierungsstoffe | Zeit bis zum Auftreten von sichtbarem Schimmelbefall oder Gasbildung |
|---|---|
| – (Kontrollversuch) | 3 Tage |
| 0,3 % 75 %ige Orthophosphorsäure | 5 Tage |
| 0,1 % Sorbinsäure | 13 Tage |
| 0,1 % Kaliumsorbat | 10 Tage |
| 0,1 % Sorbinsäure +0,3 % 75 %ige Orthophosphorsäure | mehr als 3 Monate |

Beispiel 1

Man arbeitete wie in Vergleichsbeispiel 1, nur daß eine Mischung aus Melasse und Konservierungskomponenten der in der Tabelle angegebenen Zusammensetzung verwendet wurde. Es ergaben sich folgende Haltbarkeiten:

| Konservierungsstoffe | Zeit bis zum Auftreten von sichtbarem Schimmelbefall oder Gasbildung |
|---|---|
| 0,1 % Sorbinsäure + 0,3 % 75 %ige Orthophosphorsäure + 5,0 % Melasse | mehr als 4 Monate |
| 0,1 % Kaliumsorbat + 0,3 % 75 %ige Orthophosphorsäure + 5,0 % Melasse | mehr als 4 Monate |
| 0,1 % Sorbinsäure + 0,3 % 75 %ige Orthophosphorsäure + 7,0 % Melasse | mehr als 4 Monate |
| 0,1 % Sorbinsäure + 0,3 % 75 %ige Orthophosphorsäure +10,0 % Melasse | mehr als 4 Monate |

Vergleichsbeispiel 2

Noch heiße, vorgetrocknete Preßschnitzel mit einem Wassergehalt von etwa 55 % wurden in einem Mischer mit den in der Tabelle aufgeführten Konservierungsstoffen versetzt und behandelt wie in Vergleichsbeispiel 1. Es ergaben sich folgende Haltbarkeiten:

| Konservierungsstoffe | Zeit bis zum Auftreten von sichtbarem Schimmelbefall oder Gasbildung |
|---|---|
| (Kontrollversuch) | 6 Tage |
| 0,3 % 75 %ige Orthophosphorsäure | 7 Tage |
| 0,1 % Sorbinsäure | 17 Tage |
| 0,1 % Kaliumsorbat | 12 Tage |
| 0,1 % Sorbinsäure + 0,3 % 75 %ige Orthophosphorsäure | mehr als 4 Monate |

Beispiel 2

Man arbeitete wie in Vergleichsbeispiel 2, nur daß eine Mischung aus Melasse und Konservierungskomponenten der in der Tabelle angegebenen Zusammensetzung verwendet wurde. Es ergaben sich folgende Haltbarkeiten:

| Konservierungsstoffe | Zeit bis zum Auftreten von sichtbarem Schimmelbefall oder Gasbildung |
|---|---|
| 0,1 % Sorbinsäure<br>+ 0,3 % 75 %ige Orthophosphorsäure<br>+ 5,0 % Melasse | mehr als 5 Monate |
| 0,1 % Kaliumsorbat<br>+ 0,3 % 75 %ige Orthophosphorsäure<br>+ 5,0 % Melasse | mehr als 5 Monate |
| 0,1 % Sorbinsäure<br>+ 0,3 % 75 %ige Orthophosphorsäure<br>+10,0 % Melasse | mehr als 5 Monate |
| 0,1 % Sorbinsäure<br>+ 0,3 % 75 %ige Orthophosphorsäure<br>+15,0 % Melasse | mehr als 5 Monate |

Vergleichsbeispiel 3

Noch heiße, vorgetrocknete Preßschnitzel mit einem Wassergehalt von etwa 30 % wurden in einem Mischer mit den in der Tabelle aufgeführten Konservierungsstoffen versetzt und behandelt wie in Vergleichsbeispiel 1 und 2. Es ergaben sich folgende Haltbarkeiten:

| Konservierungsstoffe | Zeit bis zum Auftreten von sichtbarem Schimmelbefall oder Gasbildung |
|---|---|
| — (Kontrollversuch) | 8 Tage |
| 0,3% 75 %ige Orthophosphorsäure | 9 Tage |
| 0,1 % Sorbinsäure | 19 Tage |
| 0,1 % Kaliumsorbat | 14 Tage |
| 0,1 % Sorbinsäure<br>+ 0,3 % 75 %ige Orthophosphorsäure | mehr als 5 Monate |

Beispiel 3

Man arbeitete wie in Vergleichsbeispiel 3, nur daß eine Mischung aus Melasse und Konservierungskomponenten der in der Tabelle angegebenen Zusammensetzung verwendet wurde. Es ergaben sich folgende Haltbarkeiten:

| Konservierungsstoffe | Zeit bis zum Auftreten von sichtbarem Schimmelbefall oder Gasbildung |
|---|---|
| 0,1 % Sorbinsäure<br>+ 0,3 % 75 %ige Orthophosphorsäure<br>+ 5,0 % Melasse | mehr als 6 Monate |
| 0,1 % Kaliumsorbat<br>+ 0,3 % 75 %ige Orthophosphorsäure<br>+ 5,0 % Melasse | mehr als 6 Monate |
| 0,1 % Sorbinsäure<br>+ 0,3 % 75 %ige Orthophosphorsäure<br>+10,0 % Melasse | mehr als 6 Monate |
| 0,1 % Sorbinsäure<br>+ 0,3 % 75 %ige Orthophosphorsäure<br>+15,0 % Melasse | mehr als 6 Monate |

**Patentansprüche**

1. Verfahren zur Konservierung von Preßschnitzeln aus der Zuckerrübenverarbeitung mit einem Wassergehalt von weniger als 80 Gew.-%, dadurch gekennzeichnet, daß man die Preßschnitzel mit einer Konservierungsmischung vermengt, bestehend aus Melasse in einer solchen Menge, daß sich die anderen Bestandteile dieser Konservierungsmischung in der Melasse auflösen oder verteilen, mindestens einer Verbindung der aus Sorbinsäure und den Sorbaten bestehenden Verbindungsklasse in einer Menge von $2 \times 10^{-4}$ bis $5 \times 10^{-3}$ Mol pro 100 g unkonservierte Preßschnitzel, und mindestens einer Verbindung der aus wasserlöslichen und physiologisch unbedenklichen anorganischen Säuren und ihren sauren Salzen bestehenden Verbindungsklasse in einer solchen Menge, daß das Gemenge aus den Preßschnitzeln und der Konservierungsmischung einen pH-Wert von höchstens 5,8 hat.

2. Verfahren nach Anspruch 1, dadurch gekennzeichnet, daß man Sorbinsäure oder Kaliumsorbat einsetzt.

3. Verfahren nach Anspruch 1, dadurch gekennzeichnet, daß man Sorbinsäure mit einer Korngröße unter 300 μm einsetzt.

4. Verfahren nach einem der Ansprüche 1 bis 3, dadurch gekennzeichnet, daß man als Säuerungskomponente Orthophosphorsäure oder Natriumhydrogenphosphat einsetzt.

5. Verfahren nach einem der Ansprüche 1 bis 4, dadurch gekennzeichnet, daß die Menge an Sorbinsäure oder Sorbaten $5 \times 10^{-4}$ bis $1,5 \times 10^{-3}$ Mol pro 100 g unkonservierte Preßschnitzel beträgt.

**Claims**

1. A process for the preservation of pressed chips from sugar beet processing, with a water content of less than 80% by weight, which comprises mixing the pressed chips with a preservation mixture comprising molasses in such an amount that the other components of this preservation mixture are dissolved or distributed in the molasses, at least one compound of the compound class comprising sorbic acid and sorbates, in an amount of $2 \times 10^{-4}$ to $5 \times 10^{-3}$ mol per 100 g or unpreserved pressed chips, and at least one compound of the compound class comprising water-soluble and physiologically acceptable inorganic acids and their acid salts, in such an amount that the mixture of the pressed chips and the preservation mixture has a pH of not more than 5.8.

2. The process as claimed in claim 1, wherein sorbic acid or potassium sorbate is used.

3. The process as claimed in claim 1, wherein sorbic acid with a particle size of less than 300 $\mu$m is used.

4. The process as claimed in any of claims 1 to 3, wherein orthophosphoric acid or sodium hydrogen phosphate is used as acidification component.

5. The process as claimed in any of claims 1 to 4, wherein the amount of sorbic acid or sorbates is $5 \times 10^{-4}$ to $1.5 \times 10^{-3}$ mol per 100 g of unpreserved pressed chips.

**Revendications**

1. Procédé de conservation de pulpes pressées provenant du traitement de betteraves à sucre, contenant moins de 80 % en poids d'eau, procédé caractérisé en ce que l'on mélange la pulpe pressée avec un mélange de conservation constitué de mélasse dans une proportion suffisante pour que les autres constituants du mélange de conservation se dissolvent ou se répartissent dans la mélasse, d'un ou de plusieurs composés pris parmi l'acide sorbique et des sorbates dans une proportion de $2 \times 10^{-4}$ à $5 \times 10^{-3}$ mol pour 100 g de la pulpe seule, et d'un ou de plusieurs composés pris parmi des acides minéraux et leurs sels acides hydrosolubles sans inconvénient physiologique, dans une proportion donnant un pH d'au plus 5,8 au mélange des pulpes pressées et du mélange de conservation.

2. Procédé selon la revendication 1, caractérisé en ce que l'on utilise l'acide sorbique ou le sorbate de potassium.

3. Procédé selon la revendication 1, caractérisé en ce que l'on utilise de l'acide sorbique en grains inférieurs à 300$\mu$m.

4. Procédé selon l'une des revendications 1 à 3, caractérisé en ce que l'on utilise comme agent d'acidification de l'acide orthophosphorique ou de l'hydrogénophosphate de sodium.

5. Procédé selon l'une des revendications 1 à 4, caractérisé en ce que la proportion d'acide sorbique ou des sorbates est de $5 \times 10^{-4}$ à $1,5 \times 10^{-3}$ mol pour 100 g de la pulpe pressée seule.